# EUROPÄISCHE PATENTSCHRIFT

(11) **EP 0 798 178 B1**
(45) Veröffentlichungstag und Bekanntmachung des Hinweises auf die Patenterteilung: **17.05.2000**
(21) Anmeldenummer: 97104059.7
(22) Anmeldetag: 11.03.1997
(51) Int. Cl.: B60R 22/34, B60R 22/28

(54) **Gurtaufroller**
Belt retractor
Rétracteur de sangle

(30) Priorität: 19.03.1996 DE 29605115 U
(43) Veröffentlichungstag der Anmeldung: 01.10.1997
(73) Patentinhaber: TRW Occupant Restraint Systems GmbH & Co. KG, 73551 Alfdorf (DE)
(72) Erfinder: Schmid, Johannes, 73527 Schwäbisch Gmünd (DE); Coras, Rolf, 73557 Schwäbisch Gmünd (DE)
(74) Vertreter: Degwert, Hartmut, Dipl.-Phys.

(56) Entgegenhaltungen:
- DE-U- 29 613 044
- GB-A- 805 358
- US-A- 3 802 641

## Beschreibung

Die Erfindung betrifft einen Gurtaufroller für einen Fahrzeug-Sicherheitsgurt, der mit einem Torsionsstab versehen ist.

Die Funktion des Torsionsstabes besteht darin, auftretende Lastspitzen im Gurtbandsystem durch elastische und/oder plastische Verformung abzubauen. Der Schlitz für die Befestigung des Endabschnittes des Gurtbandes erstreckt sich üblicherweise von der Mantelfläche in einer zur Längsachse der Gurtspule parallelen und von dieser beabstandeten Ebene und mündet wieder an der Mantelfläche, und der Endabschnitt des Gurtbandes wird an dem Gurtaufroller befestigt, indem das durch den Schlitz hindurchgeschobene und wieder auf der Mantelfläche austretende Ende des Endabschnittes mit einer Verdickung versehen wird, die breiter als die Minimalbreite des Schlitzes ist. Durch den für die Aufnahme des Stabes vorgesehenen Innenraum der Gurtspule ist deren Festigkeit allerdings beeinträchtigt, was durch eine entsprechend massive Dimensionierung kompensiert werden muß, damit auch hohe Belastungen der Gurtspule, beispielsweise im Blockierfall und bei sehr weit oder vollständig von der Gurtspule abgewickeltem Gurtband, mit der gewünschten Sicherheit aufgenommen werden können.

Aus der US-A-3 802 641 ist ein Gurtaufroller nach dem Oberbegriff des Anspruchs 1 bekannt, dessen Gurtspule mit einer Innenachse versehen ist. Das Ende des Gurtbandes weist einen Keil auf, der durch Klemmung in einem Schlitz zwischen der Gurtspule und der Innenachse gehalten wird, sich also an der Innenachse abstützt. Hierbei kann sich das verdickte Ende des Gurtbandes unkontrolliert im Spalt zwischen dem Torsionsstab und der Gurtspule verklemmen.

Aufgabe der Erfindung ist es, einen Gurtaufroller nach dem Oberbegriff des Anspruchs 1 dahingehend weiterzuentwickeln, daß die Beanspruchung der Gurtspule auch bei sehr weit von der Gurtspule abgewickeltem Gurtband und hohen Belastungen vermindert ist.

Der erfindungsgemäßer Gurtaufroller weist eine in einem Rahmen drehbar gelagerte Gurtspule auf, die einen koaxialen Innenraum und einen koaxial mit radialem Spiel in diesem angeordneten Torsionsstab aufweist sowie einen achsparallelen Schlitz in ihrer Mantelfläche, der zum Innenraum der Gurtspule geöffnet ist, wobei ein Endabschnitt des Gurtbandes durch den Schlitz in den Innenraum der Gurtspule, um den Stab herum und schließlich durch den Schlitz wieder aus dem Innenraum heraus geführt ist und das wieder aus dem Innenraum herausgeführte Ende des Gurtbandes eine Verdickung aufweist, und ist dadurch gekennzeichnet, daß die in Umfangsrichtung der Gurtspule gemessene Breite der Verdickung größer als die Minimalbreite des Schlitzes ist. Vorteilhaft ist, daß ein wesentlicher Teil der vom Gurtband übertragenen Belastungen direkt in den Torsionsstab und nicht in die Gurtspule eingeleitet wird.

Gemäß einer bevorzugten Ausführungsform ist bei einem erfindungsgemäßen Gurtaufroller mit einer Sperrverzahnung an jedem axialen Ende der Gurtspule vorgesehen, daß die Sperrverzahnungen am Außenumfang von mit der Gurtspule koaxialen Sperrscheiben gebildet sind und daß eine vom Gurtband auf den Stab aufgebrachte Radialbelastung zu mindestens einem wesentlichen Teil direkt vom Stab an den axialen Enden der Gurtspule in die Sperrscheiben eingeleitet wird. Bei dieser Ausgestaltung werden die vom Gurtband auf den Gurtaufroller übertragenen Belastungen direkt von den Sperrscheiben in den Rahmen eingeleitet, an dem sich die Sperrscheiben bei besonders hoher Belastung abstützen.

Weitere Ausgestaltungen eines erfindungsgemäßen Gurtaufrollers sind in den Unteransprüchen gegeben.

Die Erfindung wird nachfolgend anhand einer bevorzugten Ausführungsform beschrieben, die in der Zeichnung dargestellt ist. In dieser zeigen:
- Figur 1: eine perspektivische schematische Ansicht einer bevorzugten Ausführungsform eines erfindungsgemäßen Gurtaufrollers;
- Figur 2: einen schematischen Querschnitt durch die Gurtspule des Gurtaufrollers von Fig. 1;
- Figur 3: einen schematischen Querschnitt durch die Gurtspule des Gurtaufrollers von Fig. 1 gemäß einer alternativen Ausgestaltung;
- Figur 4: eine perspektivische Ansicht der Gurtspule des Gurtaufrollers von Fig. 1; und
- Figur 5: eine perspektivische Ansicht eines Stabes und zweier Sperrscheiben, die bei dem Gurtaufroller gemäß Fig. 1 verwendet werden.

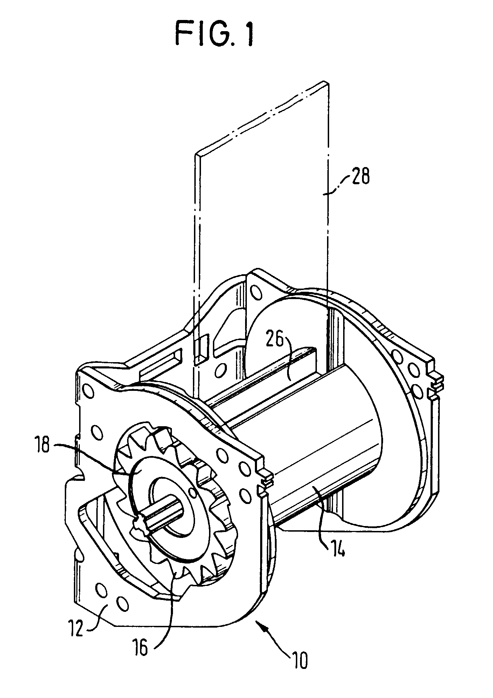

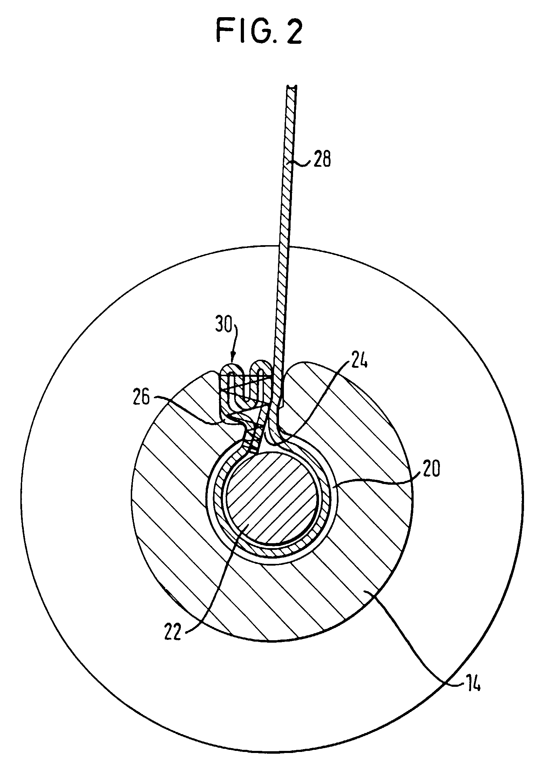

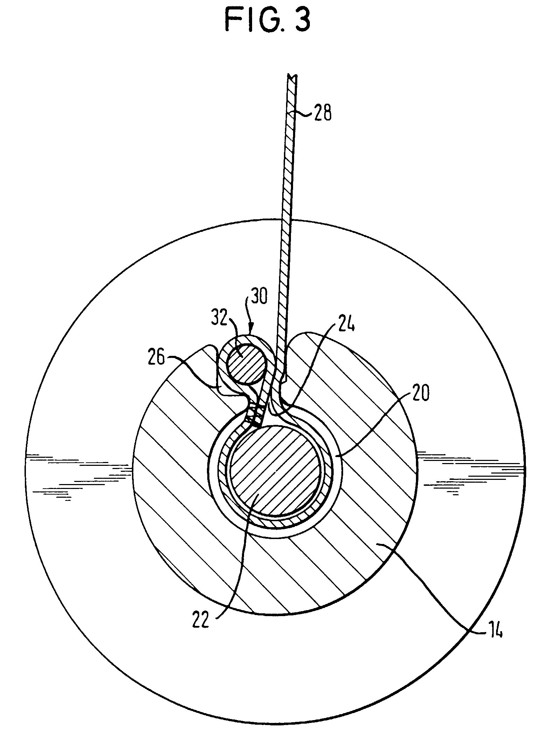

In den Figuren 1 bis 5 ist schematisch eine bevorzugte Ausführungsform eines erfindungsgemäßen Gurtaufrollers 10 dargestellt, wobei in dieser Darstellung die Funktionsteile, die für das Verständnis der Erfindung nicht wesentlich sind, im Hinblick auf eine übersichtliche Darstellung weggelassen wurden. Der Gurtaufroller 10 weist einen Rahmen 12 auf, in dem mittels (nicht dargestellter) Lagerungen eine Gurtspule 14 drehbar gelagert ist. Die Gurtspule 14 weist an ihren axialen Enden jeweils eine Sperrverzahnung 16 auf, die am Außenumfang von mit der Gurtspule koaxialen Sperrscheiben 18 gebildet sind. Die Gurtspule 14 weist einen koaxialen Innenraum 20 auf, in dem koaxial ein Stab 22 angeordnet ist. Zwischen dem Innenraum 20 und der Mantelfläche der Gurtspule 14 erstreckt sich ein achsparalleler Schlitz 24, der an seinem außenseitigen Ende mit einer Verbreiterung 26 versehen ist. Das auf den Gurtaufroller 10 aufwickelbare Gurtband weist einen Endabschnitt 28 auf, der an der Gurtspule 14 befestigt ist. Zu diesem Zweck ist das Ende des Endabschnittes 28 durch den Schlitz 24 in den Innenraum 20 der Gurtspule, dann um den Stab 22 herum und schließlich durch den Schlitz 24 wieder aus dem Innenraum heraus geführt. Das Ende des Endabschnittes 28 ist mit einer Verdickung 30 versehen, die deren in Umfangsrichtung der Gurtspule 14 gemessene Breite größer als die Minimalbreite des Schlitzes 24 ist und von der Verbreiterung 26 aufgenommen ist. Bei der in Figur 2 dargestellten Ausführungsform der Erfindung besteht die Verdickung aus mehreren übereinanderliegend miteinander vernähten Lagen des Gurtbandes, während bei der in Figur 3 dargestellten alternativen Ausgestaltung die Verdickung durch ein Halteteil 32 gebildet ist, das in eine Schlaufe am Ende des Gurtbandes eingenäht ist.

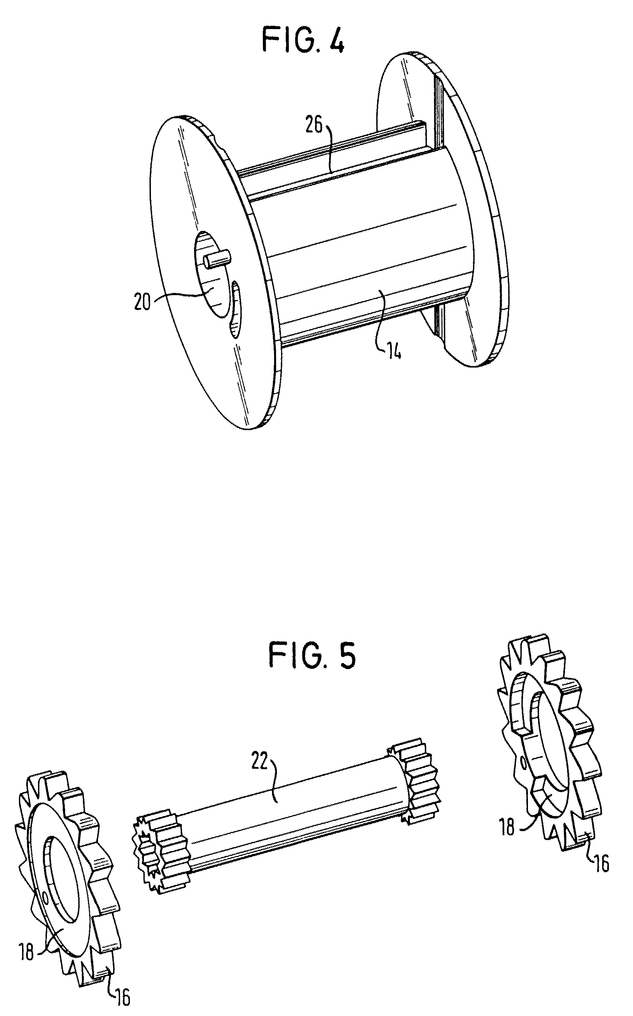

Der Stab 22 ist ein Torsionsstab, dessen bezüglich Fig. 5 auf der linken Seite liegendes Ende drehfest mit der zugehörigen Sperrscheibe 18 und dessen auf der rechten Seite liegendes Ende drehfest mit der Gurtspule 14 verbunden ist. Dieser Torsionsstab dient dazu, auftretende Lastspitzen durch elastische und/oder plastische Verformung abzubauen. Durch Umschlingungsreibung zwischen dem Torsionsstab 22 und dem um diesen herum geführten Gurtband wird nur ein geringer Teil der von dem Gurtband übertragenen Belastungen auf die Verdickung 30 aufgebracht.

Durch die Ausgestaltung des erfindungsgemäßen Gurtaufrollers ergeben sich die folgenden Vorteile: Da das mit der Verdickung 30 versehene Ende 28 des Gurtbandes auf der Außenseite der Gurtspule 14 liegt, kann das Gurtband am Gurtaufroller 10 montiert werden, nachdem dieser bereits vollständig zusammengebaut ist. Zu diesem Zweck wird der Endabschnitt 28 durch den Schlitz 24 in den Innenraum 20 der Gurtspule hinein, dann im Innenraum 20 um den Stab 22 herum und wieder durch den Schlitz 24 aus der Gurtspule 14 heraus geschoben, bis das Ende des Endabschnittes 28 wieder aus dem Schlitz 24 austritt. Dann wird die Verdickung 30 gebildet.

Ein wesentlicher Vorteil der Erfindung ergibt sich, wenn bei vollständig von der Gurtspule 14 abgewickeltem Gurtband dieses sehr hohe Belastungen auf den Gurtaufroller 10 überträgt. Da der Endabschnitt 28 des Gurtbandes den Stab 22 vollständig umschlingt, wird nahezu die gesamte vom Gurtband aufgebrachte Belastung vom Stab 22 aufgenommen. Die über die Verdickung in die Gurtspule 14 eingeleitete Last ist vergleichsweise gering. Vom Stab 22 wird die aufgebrachte Belastung an den axialen Enden der Gurtspule 14 in die Sperrscheiben 18 und von diesen direkt in den Rahmen des Gurtaufrollers 10 abgeleitet, an dem sich die Sperrverzahnungen 16 bei sehr hohen Belastungen der Gurtspule 14 abstützen. Somit kommt es zu besonders geringen Belastungen der Gurtspule 14, und es ergibt sich, obwohl die Gurtspule 14 aufgrund der getrennt ausgebildeten Sperrverzahnungen 16 im Vergleich zu Gurtspulen 14 mit einstückig angeformten Sperrverzahnungen eine geringere Festigkeit aufweist, eine insgesamt sehr große Belastbarkeit des erfindungsgemäßen Gurtaufrollers.

## Patentansprüche

1. Gurtaufroller (10) mit einer in einem Rahmen (12) drehbar gelagerten Gurtspule (14), die einen koaxialen Innenraum (20) und einen koaxial mit radialem Spiel in diesem angeordneten Torsionsstab (22) aufweist sowie einen achsparallelen Schlitz (24) in ihrer Mantelfläche, der zum Innenraum (20) der Gurtspule (14) geöffnet ist, wobei ein Endabschnitt (28) des Gurtbandes durch den Schlitz (24) in den Innenraum (20) der Gurtspule (14), um den Stab (22) herum und schließlich durch den Schlitz (24) wieder aus dem Innenraum (20) heraus geführt ist und das wieder aus dem Innenraum (20) herausgeführte Ende des Gurtbandes eine Verdickung (30) aufweist, dadurch gekennzeichnet, daß die in Umfangsrichtung der Gurtspule gemessene Breite der Verdickung größer als die Minimalbreite des Schlitzes (24) ist.

2. Gurtaufroller nach Anspruch 1, dadurch gekennzeichnet, daß die Verdickung (30) durch mehrere Lagen Gurtband gebildet ist, die übereinanderliegend miteinander vernäht sind.

3. Gurtaufroller nach Anspruch 1, dadurch gekennzeichnet, daß die Verdickung (30) durch ein in das Ende eingenähtes Halteteil (32) gebildet ist.

4. Gurtaufroller nach einem der vorhergehenden Ansprüche, dadurch gekennzeichnet, daß der Schlitz (24) außenseitig eine Verbreiterung (26) für die Aufnahme der Verdickung (30) aufweist.

5. Gurtaufroller nach einem der vorhergehenden Ansprüche, mit einer Sperrverzahnung (16) an jedem axialen Ende der Gurtspule (14), dadurch gekennzeichnet, daß die Sperrverzahnungen (16) am Außenumfang von mit der Gurtspule (14) koaxialen Sperrscheiben (18) gebildet sind und daß eine vom Gurtband auf den Stab (22) aufgebrachte Radialbelastung zu mindestens einem wesentlichen Teil direkt vom Stab (22) an den axialen Enden der Gurtspule (14) in die Sperrscheiben (18) eingeleitet wird.

## Claims

1. A belt retractor (10) comprising a belt reel (14) rotatably mounted in a frame (12), said belt reel having a coaxial interior space (20) and a torsion rod (22) arranged coaxially therein with radial play, as well as a slot (24) extending parallel to the axis of the belt reel in the shell surface thereof, the slot (24) being open towards the interior space (20) of the belt reel (14), an end section (28) of the belt webbing being guided through the slot (24) into the interior space (20) of the belt reel (14), around the rod (22) and finally through the slot (24) back out of the interior space (20), and the end of the belt webbing which is led back out of the interior space (20) having a thickened part (30), characterized in that the width of the thickened part as measured in the peripheral direction of the belt reel is larger than the minimum width of the slot (24).

2. The belt retractor as claimed in claim 1, characterized in that the thickened part (30) is formed by several plies of the belt webbing, which are sewn together in a superimposed state.

3. The belt retractor as claimed in claim 1, characterized in that the thickened part (30) is formed by a holding part (32) sewn into the end.

4. The belt retractor as claimed in any one of the preceding claims, characterized in that the slot (24) is provided with a widened portion (26) on the outside to receive the thickened part (30).

5. The belt retractor as claimed in any one of the preceding claims, comprising a locking toothing (16) at each axial end of the belt reel (14), characterized in that the locking toothings (16) are formed at the outer periphery of locking discs (18) which are coaxial with the belt reel (14), and in that a radial load, applied by the belt webbing to the rod (22), is introduced at least to a substantial extent directly from the rod (22) at the axial ends of the belt reel (14) into the locking discs (18).

## Revendications

1. Enrouleur de ceinture (10) comprenant une bobine de ceinture (14) qui est montée tournante dans un châssis (12) et qui présente une cavité intérieure coaxiale (20), une barre de torsion (22) disposée coaxialement à l'intérieur de celle-ci avec un jeu radial, une fente (24), ménagée dans sa surface périphérique parallèlement à la barre et qui est ouverte vers la cavité intérieure (20) de la bobine de ceinture (14), une portion terminale (28) de la sangle de ceinture pénétrant dans la cavité intérieure (20) de la bobine de ceinture (14) par la fente (24), s'enroulant autour de la barre (22) et ressortant finalement de la cavité intérieure (20) par la fente (24) et l'extrémité de la sangle de ceinture qui ressort de la cavité intérieure (20) présentant un renflement (30), caractérisé en ce que la largeur du renflement, mesurée dans le sens circonférentiel de la bobine de ceinture, est supérieure à la largeur minimale de la fente (24).

2. Enrouleur de ceinture selon la revendication 1, caractérisé en ce que le renflement (30) est formé par plusieurs couches de sangle de ceinture qui sont cousues entre elles en étant supperposées.

3. Enrouleur de ceinture selon la revendication 1, caractérisé en ce que le renflement (30) est formé par une pièce de retenue (32) logée dans un rabat cousu de l'extrémité.

4. Enrouleur de ceinture selon l'une des revendications précédentes, caractérisé en ce que la fente (24) comporte extérieurement un élargissement (26) pour recevoir le renflement (30).

5. Enrouleur de ceinture selon l'une des revendications précédentes, comprenant une denture d'arrêt (16) à chaque extrémité axiale de la bobine de ceinture (14), caractérisé en ce que les dentures d'arrêt (16) sont formées à la périphérie extérieure de disques d'arrêt (18) montés coaxialement à la bobine de ceinture (14), et en ce qu'une sollicitation radiale imposée par la sangle de ceinture à la barre (22) est transmise, au moins en majeure partie, par la barre (22) directement aux disques d'arrêt (18) au niveau des extrémités axiales de la bobine de ceinture (14).
